# FASCICULE DE BREVET EUROPEEN

(11) **EP 2 642 858 B1**
(45) Date de publication et mention de la délivrance du brevet: **27.03.2019**
(21) Numéro de dépôt: 11793714.4
(22) Date de dépôt: 24.11.2011
(51) Int. Cl.: A01N 59/26, A01N 31/16, A01N 65/00, A01P 3/00, A23B 7/154, A23B 7/157

(54) **NOUVEAU PROCÉDÉ DE TRAITEMENT DE PRODUITS VÉGÉTAUX AVANT OU APRÈS RÉCOLTE PAR L'ACIDE PHOSPHONIQUE ET UNE HUILE ESSENTIELLE**
NEUES VERFAHREN ZUR BEHANDLUNG VON PFLANZLICHEN PRODUKTEN VOR ODER NACH DER ERNTE MIT PHOSPHONSÄURE UND EINEM ÄTHERISCHEN ÖL
NOVEL METHOD FOR THE PRE- OR POST-HARVEST TREATMENT OF PLANT PRODUCTS USING PHOSPHONIC ACID AND AN ESSENTIAL OIL

(30) Priorité: 24.11.2010 FR 1059693
(43) Date de publication de la demande: 02.10.2013
(73) Titulaire: Xeda International, 13670 Saint Andiol (FR)
(72) Inventeur: SARDO, Alberto, F-13160 Chateaurenard (FR)
(74) Mandataire: Lavoix
(86) Numéro de dépôt international: PCT/EP2011/070912
(87) Numéro de publication internationale: WO 2012/069576

(56) Documents cités:
- EP-A1- 1 854 353
- EP-A1- 1 941 802
- EP-A1- 1 952 694
- WO-A1-96/39846
- FR-A1- 2 819 992
- FR-A1- 2 867 026
- FR-A1- 2 913 177
- US-A- 4 075 324
- US-A- 5 997 910
- DATABASE WPI Week 198537 Thomson Scientific, London, GB; AN 1985-226603 XP002637119, & JP 60 146803 A (SATSUKIME K) 2 août 1985 (1985-08-02)
- CORSI G ET AL: "Biological and phytochemical aspects of Valeriana officinalis", BIOCHEMICAL SYSTEMATICS AND ECOLOGY, PERGAMON PRESS, GB, vol. 12, no. 1, 1 janvier 1984 (1984-01-01), pages 57-62, XP023532867, ISSN: 0305-1978, DOI: 10.1016/0305-1978(84)90011-5 [extrait le 1984-01-01]
- BARANAUSKIENE R: "Essential oil composition of Valeriana officinalis ssp. officinalis grown in Lithuania", CHEMISTRY OF NATURAL COMPOUNDS, KLUWER ACADEMIC PUBLISHERS-CONSULTANTS BUREAU, NE, vol. 43, no. 3, 1 mai 2007 (2007-05-01), pages 331-333, XP019525760, ISSN: 1573-8388, DOI: 10.1007/S10600-007-0123-0

## Description

La présente invention concerne un procédé de traitement de produits végétaux avant ou après récolte. Il importe que les fruits et légumes ne perdent pas leur qualité organoleptique et conservent un aspect engageant lors de leur mise sur le marché pour une consommation rapide. Les phénomènes susceptibles d'altérer l'aspect et le goût des fruits et légumes sont notamment la prolifération de champignons et de bactéries à leur surface, qui peuvent apparaitre lors le la culture et/ou après récolte. Ces détériorations sont encore plus rapides au niveau des micro-blessures et des entailles apparaissant sur la peau au cours du stockage pendant des périodes relativement longues avant d'être mis sur le marché, ou lors de la manipulation des fruits et légumes. Un autre phénomène susceptible d'endommager les plantes en culture, fruits et légumes est le phénomène d'échaudure qui se manifeste par un noircissement de la peau des fruits et légumes touchés.

L'acide phosphonique (H-P0₃H₂) (AP) est aussi appelé acide phosphoreux (H₃P0₃). L'activité de l'AP est surtout connue sur les mildious (phycomycètes). En revanche, en ce qui concerne les ascomycètes et les champignons imparfaits parasites des fruits et légumes (*Fusarium spp., Botrytis sp., Phlyctema sp., Penicillium spp.,* etc.), l'AP a peu d'efficacité. Des tentatives ont cependant été faites d'appliquer l'AP en post-récolte. En effet, les limites maximales de résidu autorisées (LMR) (exprimés en AP) après traitement sur plusieurs cultures sont entre 25 et 50 ppm : on pourrait donc traiter en post- récolte avec des doses relativement élevées. A titre de comparaison, la LMR du Pyriméthanil pour les mêmes cultures est entre 5 et 10 ppm. Malheureusement, à température ambiante, notamment sur les *Penicilliums*, l'activité est très faible même à des doses de traitement proches de 10 000 ppm notamment dans le cas des *Penicilliums* d'oranges.

On sait que l'augmentation de la température de la solution de traitement augmente de manière importante les performances des différents fongicides, surtout quand les températures dépassent 40°C. Ainsi, dans les demandes EP 1 941 802 et EP 1 952 694 est décrit un nouveau procédé de traitement de fruits et de légumes au moyen de l'acide phosphonique et d'eugénol, par application de cette combinaison à température comprise entre 30° et 60°C. Néanmoins, cette application à température élevée est peu aisée à mettre en oeuvre, entraine des contraintes, doit et est généralement réalisée par immersion et peu appropriée à l'aspersion. Ainsi, de fait, ce traitement convient difficilement au traitement au verger. EP 1 941 802 ne décrit que l'activité sur *Penicilium* et ne rapporte aucun résultat sur l'activité du procédé à température ambiante.

En pratique, il s'est avéré que l'acide phosphonique et l'eugénol exercent une activité généralement à chaud sur un large spectre mais d'intensité faible qui est estimée insuffisante dans la pratique de tous les jours.

Il est donc désirable de mettre à disposition un nouveau procédé de traitement des plantes en culture, fruits et légumes, à température ambiante.

Ainsi, la présente invention concerne un procédé de traitement de produits végétaux avant ou après récolte comprenant l'application d'une composition comprenant :
- une forme au moins partiellement salifiée de l'acide phosphonique, et
- une huile essentielle ou un des agent(s) terpénique(s) qu'elle contient, choisie parmi l'huile de girofle, et à titre d'agents terpéniques l'eugénol et/ou leurs mélanges, telle que ladite composition comprend entre 1% et 20% en poids/volume d'eugénol ou d'huile de girofle,
à température ambiante.

La forme au moins partiellement salifiée de l'acide phosphonique peut être un monophosphite (une molécule de phosphite H-PO₃H⁻), un diphospite (H-PO₃²⁻) ou un sesquiphosphite (H-PO₃H_{0,5}^{1,5-}) avec un cation d'un métal, tel qu'un métal alcalin (Na⁺ ou K⁺) ou alcalino-terreux (Ca²⁺, Mg²⁺). Ainsi le sel d'acide phosphonique adapté au procédé selon l'invention répond à la formule générale :

HₓM_{y}PO₃

où :
M représente un atome de métal, notamment un métal alcalin ou alcalino-terreux, ou un groupe ammonium ou un groupe amine,
x est compris entre 1 et 2,8, notamment compris entre 1 et 2,5, particulièrement entre 1,3 et 1,7 ;
y est compris entre 0,2 et 2, notamment compris entre 0,5 et 2, particulièrement entre 1,3 et 1,7 et
x+y=3.

On préfère notamment le sel H_{1,5}M_{1,5}PO₃ avec M=potassium par exemple.

On préfère notamment les sels de métal alcalin ou alcalino-terreux et particulièrement les sels de potassium d'acide phosphonique et particulièrement le sesquiphosphite de potassium.

Le sel d'acide phosphonique peut être préparé préalablement ou au formé *in situ* au sein de la composition traitante. Il est généralement préparé ou formé par réaction entre l'acide phosphonique et la base correspondante, telle que KOH par exemple, la quantité de base étant adaptée au sel désiré.

Dans ce qui précède et ce qui suit, les expressions « forme au moins partiellement salifiée de l'acide phosphonique » et « sel d'acide phosphonique » pourront être utilisées de façon interchangeables et font référence au sel préalablement préparé ou au sel formé de fait, *in situ.*

Le traitement selon l'invention est particulièrement adapté au traitement fongicide et/ou bactéricide. Il convient plus particulièrement à l'encontre des champignons *Phytophtora, Monilia, Penicillium sp, Geotrichum sp, Rhizoctonia, Helminthosporium, Colletotrichum,* et notamment *Geotrichum candidum, Rhizoctonia, Helminthosporium solani et Colletotrichum gloeosporioides.*

L'expression « produits végétaux avant ou après récolte » vise les plantes en culture ainsi que les fruits ou légumes sur pieds ou récoltés.

Le traitement peut être réalisé au verger ou en post-récolte, au moyen de méthodes connues. Ainsi, l'application de la composition traitante peut être effectuée par tout moyen connu en soi, notamment par aspersion des produits végétaux avant ou après récolte ou immersion des fruits ou légumes, dans la solution de traitement maintenue.

Les fruits et légumes peuvent être aussi être traités lorsqu'ils sont stockés en caisses ou palettes, ou encore hors caisse ou palette, avant leur commercialisation, comme c'est le cas pour les oranges par exemple.

Plus préférentiellement, lorsque les fruits et légumes en caisses ou palettes sont traités par immersion, la composition traitante peut être appliquée au moyen d'un dispositif tel que décrit dans la demande FR 01 096 27, ou EP 1 941 802. Ces dispositifs sont particulièrement avantageux en ce qu'ils permettent l'application homogène de la solution sur les fruits et légumes stockés sur palette ou caisse.

Le traitement est cependant plus particulièrement adapté au traitement au verger, par aspersion à température ambiante.

La quantité de produit appliqué dépend généralement de la quantité de produits végétaux avant ou après récolte à traiter, ainsi que des conditions de stockage et le degré de maturité des fruits ou légumes stockés et/ou souhaités.

Généralement, les doses d'application de l'huile essentielle ou un des agent(s) terpénique(s) qu'elle contient, et/ou leurs mélanges, sont comprises entre 300 et 4500 ppm, notamment entre 500 et 1000 ppm. Les doses d'application de sel de potassium de l'acide phosphonique sont généralement comprises entre 1 000 et 20 000 ppm, notamment entre 1 000 et 15 000 ppm.

Le procédé selon l'invention comprend l'application de ladite composition mélange comprenant l'huile de girofle ou eugénol et/ou leurs mélanges, et du sel de l'acide phosphonique.

Dans ce cas, le procédé peut comprendre également l'étape préliminaire de préparation dudit mélange, comprenant l'ajout d'une composition comprenant une huile essentielle ou un des agent(s) terpénique(s) qu'elle contient, et/ou leurs mélanges, , d'une part, à une composition comprenant un sel de l'acide phosphonique, d'autre part.

Cette étape peut être réalisée par mélange des deux compositions dans l'eau, éventuellement en présence d'émulsifiant, puis par neutralisation par ajout lent de la quantité de base nécessaire à l'obtention du sel et/ou pH désiré.

Ledit mélange peut également comprendre un ou plusieurs solvants organiques tel que les alcools et/ou un ou plusieurs émulsifiants tel que Tween 80.

Généralement, la composition comprenant le sel d'acide phosphonique est une solution aqueuse du sel de phosphite désiré ou une solution aqueuse comprenant l'acide phosphonique et la base désirée à la concentration nécessaire. On peut ainsi citer une solution aqueuse concentrée de sesquiphosphite de potassium à 750g/l.

La composition comprenant l'acide phosphonique est généralement utilisée à concentration comprise entre 0,1% et 1% volumiques, c'est-à-dire entre 0,1 litre et 1 litre de composition pour 100 litres d'eau.

La composition comprenant une huile essentielle ou un des agent(s) terpénique(s) qu'elle contient, et/ou leurs mélanges peut comprendre, outre l'huile essentielle ou un des agent(s) terpénique(s) qu'elle contient, et/ou leurs mélanges , un ou plusieurs émulsifiants non ioniques, de la lécithine, de l'huile de soja.

On peut ainsi citer la composition Bioxeda®, commercialisé par Xeda ; celle-ci comprend généralement (pourcentage en poids) :
- huile de girofle : 20 %
- émulsifiant non ionique : 18 %
- lécithine hydrolysée : 27 %
- huile de soja : 35 %

La composition comprenant une huile essentielle ou un des agent(s) terpénique(s) qu'elle contient, et/ou leurs mélanges est généralement utilisée à concentration comprise entre 0.1 % et 1% poids/volume, c'est-à-dire entre 0,1 kg et 1 kg de composition pour 100 litres d'eau ; généralement entre 0,3% et 0,7% poids/volume.

En général, on applique entre 3000 et 10 000 litres de composition traitante ainsi reconstituée aux concentrations indiquées ci-dessus pour 100-300 tonnes de fruits ou légumes à traiter en post-récolte et entre 500 et 1000 litres/hectare au verger.

Sans vouloir être lié par la théorie, il semblerait que l'activité synergique du sel d'acide phosphonique et de l'huile essentielle ou un des agent(s) terpénique(s) qu'elle contient, et/ou leurs mélanges puisse s'exercer par une action immédiate contrôlant tout développement de champignons, et/ou par l'effet de salification partielle de l'acide phosphonique et par exemple par l'eugénol, conduisant à la formation d'un sel mixte phosphite/eugénate de potassium qui, en agissant comme une solution tampon, ralentirait l'évaporation rapide du produit volatil (l'eugénol) et garantirait ainsi la présence prolongée de deux matières actives sur la base végétale.

L'effet synergique potentiel du mélange peut être ainsi lié à la limitation de l'évaporation de l'huile essentielle ou un des agent(s) terpénique(s) qu'elle contient, et/ou leurs mélanges, permettant ainsi la présence constante dans le temps de cette matière active sur le végétal traité.

Le procédé selon l'invention permet le traitement de denrées alimentaires sans laisser de résidus de produits organiques de synthèse. Il présente un très large spectre d'activité fongicide et/ou bactéricide. Il permet également le contrôle de la pourriture à froid à des concentrations assez faibles, garantissant des taux de résidus très inférieurs aux limites autorisées pour les différentes cultures. Ainsi, les concentrations d'acide phosphonique utilisées par le procédé selon l'invention permettent d'obtenir des résidus jusqu'à environ dix fois inférieurs aux limites autorisées.

La combinaison des deux matières actives ne donne pas lieu à des souches de champignons résistantes. Par ailleurs, le procédé selon l'invention présente un très faible risque de contamination ambiante, l'acide phosphonique se transformant en phosphate et l'eugénol s'évaporant dans l'atmosphère.

Le procédé selon l'invention peut également comprendre l'application d'un ou plusieurs autres produits phytosanitaires tels que des fongicides, des acaricides, des insecticides ou herbicides.

Selon un autre aspect, la présente invention concerne également les compositions adaptées au procédé selon l'invention.

Ainsi, la présente invention concerne les compositions comprenant l'acide phosphonique sous une forme au moins partiellement salifiée, une huile essentielle ou un des agent(s) terpénique(s) qu'elle contient, et/ou leurs mélanges, et un émulsifiant non ionique, de la lécithine, huile de soja, une base minérale, une base organique, de l'eau, un ou plusieurs solvant organique et/ou un ou plusieurs émulsifiants, telle que l'huile essentielle est choisie parmi l'huile de girofle, et les agents terpéniques sont l'eugénol, et telle que ladite composition comprend entre 1% et 20% en poids/volume d'eugénol ou d'huile de girofle.

Le sel d'acide phosphonique peut être préparé préalablement ou au formé *in situ* au sein de la composition traitante par réaction entre l'acide phosphonique et la base correspondante, telle que KOH par exemple, la quantité de base étant adaptée au sel désiré.

L'invention vise donc également une composition comprenant l'acide phosphonique sous une forme au moins partiellement salifiée, une huile essentielle ou un des agent(s) terpénique(s) qu'elle contient, et/ou leurs mélanges, et un émulsifiant non ionique, de la lécithine, huile de soja, une base minérale, une base organique, de l'eau, un ou plusieurs solvant organique et/ou un ou plusieurs émulsifiants, telle que l'huile essentielle est choisie parmi l'huile de girofle, et les agents terpéniques sont l'eugénol, et telle que ladite composition comprend entre 1% et 20% en poids/volume d'eugénol ou d'huile de girofle

De façon inattendue, les compositions selon l'invention sont limpides et stables dans le temps.

Les combinaisons selon l'invention présentent une température comprise entre 0°C et 30°C.

Ainsi, les compositions comprennent généralement :
- entre 10 et % et 60% en poids/volume de sel d"acide phosphonique,
- entre 1% et 20% en poids/volume d'une huile essentielle ou un des agent(s) terpénique(s) qu'elle contient, et/ou leurs mélanges
- dans l'eau.

Plus particulièrement :
- entre 10% et 20% en poids/volume d"acide phosphonique, entre 3% et 10% en poids/volume d'une huile essentielle ou un des agent(s) terpénique(s) qu'elle contient, et/ou leurs mélanges et entre 10% et 20% en poids/volume de base.

Les compositions selon l'invention peuvent également comprendre un émulsifiant non ionique, de la lécithine, huile de soja, une ou plusieurs bases de l'eau, un ou plusieurs solvants organiques tel que les alcools et/ou un ou plusieurs émulsifiants tel que Tween 80.

Les compositions selon l'invention peuvent être préparées par mélange d'une solution concentrée de sesquiphosphite de potassium à 750 g/l et d'une composition comprenant (% en poids) :
- huile essentielle : 20%
- émulsifiant non ionique : 18 %
- lécithine hydrolysée: 27 %
- huile de soja : 35 %

Les compositions selon l'invention peuvent être préparées selon la méthode décrite ci-avant pour l'étape préliminaire du procédé selon l'invention.

Généralement, le pH des compositions selon l'invention est compris entre 5 et 8, particulièrement entre 6,2 et 7,4 et plus avantageusement entre 6,5 et 7.

Plus particulièrement, la présente invention concerne donc également une composition comprenant un sel de l'acide phosphonique, partiellement ou totalement salifié, en mélange avec une huile essentielle ou un des agent(s) terpénique(s) qu'elle contient, et/ou leurs mélanges non salifié, en solution aqueuse, ladite composition présentant un pH compris entre 5 et 8.

Il est considéré qu'un pH plus élevé aboutirait à la perte excessive de volatilité de l'eugénol dont l'activité partiellement par les vapeurs, ainsi qu'un phénomène de phytotoxicité.

Un pH inférieur produirait une évaporation rapide du terpène avec perte d'activité du mélange.

Les exemples suivants sont donnés à titre illustratif et non limitatif de la présente invention.

### Exemples

### Exemple 1 : Activité de combinaisons d'acide phosphonique et d'huiles essentielles (ou leurs ingrédients terpénique) à température ambiante.

L'efficacité de combinaisons d'huiles essentielles et de sel de potassium d'acide phosphonique (sesquiphosphite de potassium) pour réduire la viabilité de maladies fongicides sur pommes de terre pendant le stockage a été mesurée de la façon suivante : les tubercules ont été recueillis. 500 tubercules ont été sélectionnés pour leur infection moyenne de *rhizoctonia* (variété Nicola Bio) ; *Helminthosporium solani* (variété Vivaldi conventionnelle). Les tubercules ont été incubés à 15° pendant 45 jours pour permettre le développement des symptômes. 50 tubercules (6 à 8 kg) ont été traités avec une composition d'huile essentielle (à 570 ppm ou 1140 ppm), une composition de sel de potassium d'acide phosphonique à 0,6% ou 1,2% en poids, ainsi que leurs mélanges. La solution d'acide phosphonique a été aspergée à température ambiante à raison de 75 mL par 5 kg. 50 mL de solution d'huile de girofle ont été vaporisés. Les tubercules ont été incubés à 8°C pendant 45 jours après traitement. La viabilité des colonies de *rhizoctonia* et d*'Helminthosporium* a été monitorée. Les résultats sont résumés dans le tableau suivant.

**Tableau 1**

| | Viabilité des propagules (%) | |
|---|---|---|
| Traitement | *Rhizoctonia* | *Helminthosporium solani* |
| Contrôle | 92 | 82 |
| 0,6% sesquiphosphite de potassium | 60 | 30 |
| 1,2% sesquiphosphite de potassium | 22 | 6 |
| 570 ppm huile de girofle | 64 | 40 |
| 570 ppm thymol | 75 | 45 |
| 570 ppm carvacrol | 52 | 50 |
| 570 ppm géraniol | 83 | 38 |
| 570 ppm huile de girofle + 0,6% sesquiphosphite de potassium | 24 | 24 |
| 570 ppm huile de girofle + 1,2% sesquiphosphite de potassium | 20 | 0 |
| 1140 ppm huile de girofle | 30 | 6 |
| 1140 ppm huile de girofle + 0,6% sesquiphosphite de potassium | 6 | 0 |
| 1140 ppm huile de girofle + 1,2% sesquiphosphite de potassium | 0 | 0 |
| 570 ppm thymol + 0,6% sesquiphosphite de potassium | 18 | 16 |
| 570 ppm carvacrol + 0,6% sesquiphosphite de potassium | 15 | 22 |
| 570 ppm geraniol + 0,6% sesquiphosphite de potassium | 26 | 16 |

Les résultats ci-dessus montrent que l'acide phosphonique seul ou une huile essentielle (ou leur ingrédient terpènique) seule contrôle de façon tout à fait insuffisante le développement de *rhizoctonia* ou d*'Helminthosporium solani.* La combinaison des deux agents actifs permet d'obtenir un contrôle total du développement d*'Helminthosporium* aux doses les plus basses d'huile et d'acide phosphonique. De même, la concentration aux doses les plus fortes d'huile de girofle permet d'inhiber de façon totale le développement de *rhizoctonia,* ce qui est remarquable car ce champignon est très difficile à contrôler. Ces résultats sont particulièrement inattendus car ils permettent d'atteindre le contrôle total d'un champignon après inoculation, résultat rarissime.

### Exemple 2 : Activité d'une combinaison d'acide phosphonique et d'huile de girofle à température ambiante sur agrumes

L'efficacité/sélectivité d'une composition d'huile de girofle et de sel de potassium d'acide phosphonique a été évaluée contre *Geotrichum sp* sur agrumes (orange et mandarine).

Les fruits ont été inoculés avec une suspension de spores de *Geotrichum sp* après perforation de la peau. L'application a été réalisée par aspersion, à température ambiante dans le cas de l'acide phosphonique seul ou de la combinaison avec l'huile de girofle. Lorsque l'huile de girofle seule a été appliquée, les fruits ont été immergés pendant 2 mn dans un bain à température comprise entre 49° et 51°C. Les fruits ont été stockés. A intervalles de temps, les fruits ont été inspectés individuellement pour les signes de phytotoxicité et d'efficacité, en déterminant le pourcentage de la surface de la peau affectée et le stade de développement de la maladie chez les contrôles. Les variables étudiées ont été l'incidence de la maladie (pourcentage de fruits affectés) et la sévérité de l'attaque (pourcentage de la surface du fruit affecté par la maladie).

Les traitements effectués sont résumés dans le tableau suivant.

| Traitement | Formulation | | | Ingrédient actif | Dilution | Dose appliquée (poids ingrédient actif) | Conditions d'application | Pourcentage de fruits affectés à 14 jours | Pourcentage des dommages par fruit à 14 jours |
|---|---|---|---|---|---|---|---|---|---|
| | Conc. | Unité | Type | | | | | | |
| 1. Contrôle non traité | | | | | | | | 12,5 (0,0 %) | 0,37 (0,0 %) |
| 2. BioXeda | 180 | g/L | EC | Eugénol | 700 ml/100 L | 126 g/100 L | Immersion à 50°C (2 mn) | 15 (-20 %) | 0,32 (12,9 %) |
| 3. K-Phos | 750 | g/L | SL | Sesquiphosphite de potassium | 500 ml/100 L | 375 g/100 L | Aspersion à température ambiante | 14,78 (-18,2 %) | 0,95 (-156,9 %) |
| 4. BioXeda K-Phos | 180 | g/L | EC | Eugénol Sesquiphosphite de potassium | 1500 ml/100 L | 270 g /100 L | | 2,5 (80 %) | 0,03 (91,6 %) |
| | 750 | g/L | SL | | 500 ml/100 L | 375 g/100 L | | | |

| | | | | | | | | | |
|---|---|---|---|---|---|---|---|---|---|
| EC : concentré émulsifiable SL : concentré soluble | | | | | | | | | |

Les résultats du tableau ci-dessus obtenus pour la mandarine ortanique comparent les témoins non traités à des fruits traités à l'huile de girofle seule appliquée à 50°C, les fruits traités au sel de potassium d'acide phosphonique seul et des fruits traités à température ambiante avec la combinaison des deux compositions.

Après 14 jours de traitement, l'activité de l'huile de girofle seule et du sel de potassium d'acide phosphonique seul est nulle. Cependant, le mélange des deux compositions a donné une activité de 80% par rapport au contrôle. Ce phénomène est encore plus important pour l'analyse de la surface des fruits atteints où le traitement séparé ne donne aucun contrôle de développement des champignons, tandis que le mélange permet d'atteindre 91,6% de contrôle.

### Exemple 3 : Activité d'une combinaison d'acide phosphonique et d'huile de girofle à température ambiante sur oliviers affectés par Colletotrichum gloeosporioides.

Ce champignon attaque fortement les vergers d'oliviers (environ 70% des plants d'oliviers sont attaqués par ce champignon en Espagne).

Le contrôle de cette maladie est pratiquement inexistant, les seuls traitements montrant une faible activité étant les traitements au cuivre, à la bouillie bordelaise et au captan. Une composition à environ 20% d'huile de girofle et une composition de sel de potassium d'acide phosphonique ont été appliquées séparément à doses de 0,3% et 0,5% respectivement, ainsi qu'en combinaison aux mêmes doses.

Les résultats obtenus sont résumés dans le tableau suivant.

| | Pourcentage de feuilles d'olivier présentant des symptômes d'infection | |
|---|---|---|
| | t1 | t1 + 90 jours |
| Contrôle | 36,5 % | 54 % |
| 0,3% huile de girofle (à 20%) | 31 % | 42 % |
| 0,5% sesquiphosphite de potassium | 41 % | 50 % |
| 0,3% huile de girofle (à 20%) + 0,5% sesquiphosphite de potassium à 750g/l | 14 % | 12 % |

Les résultats du tableau ci-dessus montrent que l'application d'huile de girofle seule ou d'acide phosphonique seul montre une faible activité par rapport au contrôle, avec, de plus, une tendance à l'augmentation progressive du pourcentage d'infection dans le temps, parallèlement au témoin. En revanche, le mélange des deux produits montre une réduction de l'infection très marquante (environ 3 fois supérieure par rapport à l'acide phosphonique seul), ainsi qu'une tendance à la décroissance du taux d'infection à la suite des répétitions de traitement.

L'ensemble des résultats ci-dessus démontre la synergie entre l'huile de girofle et le sel de potassium de l'acide phosphonique, à température ambiante.

### Exemple 4 : Préparation d'une composition selon l'invention

On mélange l'eau, l'eugénol, l'isopropanol, l'émulsifiant et l'on ajoute la quantité calculée d'acide phosphonique. On neutralise ensuite en rajoutant lentement par petite quantité la potasse caustique jusqu'au point de salification désiré correspondant à un pH de 6,8 de la solution du mélange à 1% dans l'eau.

## Revendications

1. Procédé de traitement de produits végétaux avant ou après récolte comprenant l'application d'une composition comprenant :
- une forme au moins partiellement salifiée de l'acide phosphonique, et
- une huile essentielle ou un des agent(s) terpénique(s) qu'elle contient, choisie parmi l'huile de girofle, et à titre d'agents terpéniques l'eugénol et/ou leurs mélanges, telle que ladite composition comprend entre 1% et 20% en poids/volume d'eugénol ou d'huile de girofle,
à température ambiante.

2. Procédé selon la revendication 1 tel que le sel d'acide phosphonique répond à la formule générale :
HₓM_{y}PO₃
où :
M représente un atome de métal tel qu'un métal alcalin ou alcalino-terreux, ou un groupe ammonium ou amine,
x est compris entre 1 et 2,8;
y est compris entre 0,2 et 2 et
x+y=3.

3. Procédé selon l'une quelconque des revendications précédentes tel que le sel répond à la formule H_{1,5}M_{1,5}PO₃ avec M=potassium.

4. Procédé selon l'une quelconque des revendications précédentes tel que le sel d'acide phosphonique est préparé préalablement ou formé *in situ* au sein de la composition traitante, en présence de la base correspondante.

5. Procédé selon l'une quelconque des revendications précédentes pour le traitement de *Phytophtora, Monilia, Penicillium sp, Geotrichum sp, Rhizoctonia, Helminthosporium, Cholletotrichum.*

6. Procédé selon l'une quelconque des revendications précédentes réalisé par aspersion.

7. Procédé selon l'une quelconque des revendications précédentes tel que les doses d'application d'huile essentielle ou un des agent(s) terpénique(s) qu'elle contient, et/ou leurs mélanges sont comprises entre 300 et 4500 ppm et les doses d'application de sel de potassium de l'acide phosphonique sont comprises entre 1 000 et 20 000 ppm.

8. Procédé selon l'une quelconque des revendications précédentes comprenant en outre l'étape préliminaire de préparation dudit mélange des ingrédients par ajout d'une composition comprenant l'huile essentielle ou un des agent(s) terpénique(s) qu'elle contient, et/ou leurs mélanges , d'une part, à une composition comprenant un sel de l'acide phosphonique, d'autre part.

9. Procédé selon la revendication 8 tel que la composition comprenant le sel de l'acide phosphonique est une solution aqueuse concentrée de sesquiphosphite de potassium à 750 g/l.

10. Procédé selon la revendication 8 ou 9 tel que la composition comprenant une huile essentielle ou un des agent(s) terpénique(s) qu'elle contient, et/ou leurs mélanges comprend (pourcentage en poids) :
- huile de girofle : 20 %
- émulsifiant non ionique : 18 %
- lécithine hydrolysée : 27 %
- huile de soja : 35 %

11. Procédé selon l'une quelconque des revendications précédentes comprenant l'application d'un ou plusieurs autres produits phytosanitaires.

12. Composition comprenant l'acide phosphonique sous une forme au moins partiellement salifiée, une huile essentielle ou un des agent(s) terpénique(s) qu'elle contient, et/ou leurs mélanges, et un émulsifiant non ionique, de la lécithine, huile de soja, une base minérale, une base organique, de l'eau, un ou plusieurs solvant organique et/ou un ou plusieurs émulsifiants, telle que l'huile essentielle est choisie parmi l'huile de girofle, et les agents terpéniques sont l'eugénol, et telle que ladite composition comprend entre 1% et 20% en poids/volume d'eugénol ou d'huile de girofle

13. Composition selon la revendication 12 comprenant :
- entre 10 et % et 60% en poids/volume de sel d"acide phosphonique,
- entre 1% et 20% en poids/volume d'une huile essentielle ou un des agent(s) terpénique(s) qu'elle contient, et/ou leurs mélanges ,
- dans l'eau.

14. Composition selon l'une quelconque des revendications 12 à 13 tel que son pH est compris entre 5 et 8.

15. Composition selon l'une quelconque des revendications 12 à 14 tel que le sel d'acide phosphonique répond à la formule H_{1,5}M_{1,5}PO₃ avec M=potassium.

## Patentansprüche

1. Verfahren zum Behandeln von pflanzlichen Produkten vor oder nach der Ernte, die Anwendung einer Zusammensetzung umfassend, die enthält:
- eine mindestens teilweise in Salz überführte Form der Phosphonsäure, und
- ein ätherisches Öl oder ein Terpen- bzw. eines von Terpen-Agenzien, die es enthält, ausgewählt aus Nelkenöl, und hinsichtlich der Terpen-Agenzien Eugenol und/oder ihren Mischungen, derart, dass besagte Zusammensetzung zwischen 1 % und 20 % (Gew./Vol.) Eugenol oder Nelkenöl enthält, bei Umgebungstemperatur.

2. Verfahren nach Anspruch 1, derart, dass das Salz der Phosphonsäure die allgemeine Formel:
HₓM_{y}PO₃
erfüllt, wobei:
M ein Metallatom, wie ein Alkalimetall oder Erdalkalimetall, oder eine Ammoniumgruppe oder Amingruppe darstellt,
x zwischen 1 und 2,8 liegt;
y zwischen 0,2 und 2 liegt und
x+y=3.

3. Verfahren nach einem beliebigen der vorhergehenden Ansprüche, derart, dass das Salz die Formel H_{1,5}M_{1,5}PO₃ mit M = Kalium erfüllt.

4. Verfahren nach einem beliebigen der vorhergehenden Ansprüche, derart, dass das Salz der Phosphonsäure vorher hergestellt wird oder *in situ* in der behandelnden Zusammensetzung in Anwesenheit der entsprechenden Base gebildet wird.

5. Verfahren nach einem beliebigen der vorhergehenden Ansprüche für die Behandlung von Phytophtora, Monilia, Penicillium sp, Geotrichum sp, Rhizoctonia, Helminthosporium, Cholletrotrichum.

6. Verfahren nach einem beliebigen der vorhergehenden Ansprüche, durchgeführt durch Besprühung.

7. Verfahren nach einem beliebigen der vorhergehenden Ansprüche, derart, dass die Anwendungsdosen des ätherischen Öls oder eines Terpen-Agens bzw. eines von Terpen-Agenzien, die es enthält, und/oder ihren Mischungen, zwischen 300 und 4500 ppm liegen, und die Anwendungsdosen des Kaliumsalzes der Phosphonsäure zwischen 1000 und 20000 ppm liegen.

8. Verfahren nach einem beliebigen der vorhergehenden Ansprüche, außerdem umfassend den vorhergehenden Schritt des Herstellens der besagten Mischung der Ingredienzien durch Hinzufügen einer Zusammensetzung, die einerseits das ätherische Öl oder ein Terpen-Agens bzw. eines von Terpen-Agenzien, die es enthält, und/oder ihre Mischungen, enthält, zu einer Zusammensetzung, die andererseits ein Salz der Phosphonsäure enthält.

9. Verfahren nach Anspruch 8, derart, dass die Zusammensetzung, die das Salz der Phosphonsäure enthält, eine konzentrierte wässrige Lösung von 750 g/l Kaliumsesquiphosphit ist.

10. Verfahren nach Anspruch 8 oder 9, derart, dass die Zusammensetzung, die ein ätherisches Öl oder ein Terpen-Agens bzw. eines von Terpen-Agenzien, die es enthält, und/oder ihre Mischungen (in Gewichtsprozenten), aufweist, enthält:
- Nelkenöl: 20%
- nichtionischer Emulgator: 18%
- hydrolisiertes Lecithin: 27%
- Sojaöl: 35%.

11. Verfahren nach einem beliebigen der vorhergehenden Ansprüche, die Anwendung eines oder mehrerer anderer Pflanzenschutzprodukte umfassend.

12. Zusammensetzung umfassend Phosphonsäure in zumindest teilweise in Salz überführter Form, ein ätherisches Öl und ein Terpen-Agens bzw. eines von Terpen-Agenzien, die es enthält, und/oder ihre Mischungen, und einen nichtionischen Emulgator, Lecithin, Sojaöl, eine mineralische Base, eine organische Base, Wasser, ein oder mehrere organische Lösungsmittel und/oder ein oder mehrere Emulgatoren, derart, dass das ätherische Öl ausgewählt ist aus Nelkenöl, und die Terpenagenzien Eugenol sind, und derart, dass die besagte Zusammensetzung zwischen 1 % und 20 % (Gew./Vol.) Eugenol oder Nelkenöl enthält.

13. Zusammensetzung nach Anspruch 12, enthaltend:
- zwischen 10 % und 60 % (Gew./Vol.) Salz der Phosponsäure,
- zwischen 1% und 20 % (Gew./Vol.) eines ätherischen Öls oder eines Terpen-Agens bzw. eines von Terpen-Agenzien, die es enthält, und/oder ihre Mischungen,
- in Wasser.

14. Verfahren nach einem beliebigen der Ansprüche 12 bis 13, derart, dass ihr pH-Wert zwischen 5 und 8 liegt.

15. Verfahren nach einem beliebigen der Ansprüche 12 bis 14, derart, dass das Salz der Phosphonsäure die Formel H_{1,5}M_{1,5}PO₃ mit M = Kalium erfüllt.

## Claims

1. A method for the pre or post harvest treatment of plant products that consists of the application of:
- an at least partially salified form of phosphonic acid, and
- an essential oil or one or more terpene agent(s) contained therein, selected from clove oil and eugenol as terpene agent(s) contained therein, and / or mixtures thereof, such that the composition comprises between 1% and 20% by weight / volume of eugenol or clove oil,
at ambient temperature.

2. A method according to claim 1 wherein the phosphonic acid salt has the general formula:
HₓM_{y}PO₃
wherein:
M represents a metal atom such as alkali metal or alkaline earth metal, or an ammonium group or an amino group,
x is between 1 and 2.8,
y is between 0.2 and 2 and
x + y = 3.

3. A method according to any one of the preceding claims, such that the salt has the formula H_{1,5}M_{1,5}PO₃ with M = potassium.

4. A method according to any one of the preceding claims such that the phosphonic acid salt is prepared in advance or formed *in situ* within the treatment composition, in the presence of the corresponding base.

5. A method according to any one of the preceding claims for the treatment of *Phytophtora, Monilia, Penicillium sp, Geotrichum sp, Rhizoctonia,* Helminthosporium, *Cholletotrichum.*

6. A method according to any one of the preceding claims carried out by way of spraying.

7. A method according to any one of the preceding claims such that the doses for application of essential oil or one or more terpene agent(s) contained therein, and / or mixtures thereof are between 300 ppm and 4500 ppm and the doses for application of potassium salt of the phosphonic acid are between 1000 ppm and 20 000 ppm.

8. A method according to any one of the preceding claims further comprising the preliminary step of preparing said mixture of ingredients by the addition of a composition containing the essential oil or one or more terpene agent(s) contained therein, and / or mixtures thereof, on the one hand, to a composition containing a salt of phosphonic acid, on the other hand.

9. A method according to claim 8 such that the composition containing the salt of phosphonic acid is a concentrated aqueous solution of potassium sesquiphosphite at 750 g/l.

10. A method according to claim 8 or 9 such that the composition containing an essential oil or one or more terpene agent(s) contained therein, and / or mixtures thereof consists of (percentage by weight) :
- clove oil : 20%
- non ionic emulsifier: 18%
- hydrolysed lecithin : 27%
- soybean oil : 35%

11. A method according to any one of the preceding claims consisting of the application of one or more other phytosanitary plant protection products.

12. A composition containing phosphonic acid in an at least partially salified form, an essential oil or one or more terpene agent(s) contained therein, and / or mixtures thereof, and a non-ionic emulsifier, lecithin, soybean oil, an inorganic base, an organic base, water, one or more organic solvent and / or one or more emulsifiers, wherein the essential oil is clove oil and that the terpene agent is eugenol, and wherein the composition comprises between 1% and 20% by weight / volume of eugenol or clove oil.

13. A composition according to claim 12 containing:
- between 10% and 60% by weight / volume of phosphonic acid salt,
- between 1% and 20% by weight / volume of an essential oil or one or more terpene agent(s) contained therein, and / or mixtures thereof,
- in water.

14. A composition according to any one of claims 12 to 13 such that its pH is between 5 and 8.

15. A composition according to any one of claims 12 to 14, such that the phosphonic acid salt has the formula H_{1,5}M_{1,5}PO₃ with M = potassium.
